# EUROPEAN PATENT SPECIFICATION

(11) **EP 4 226 771 B1**
(45) Date of publication and mention of the grant of the patent: **10.07.2024**
(21) Application number: 23170190.5
(22) Date of filing: 31.03.2017
(51) Int. Cl.: A23G 9/28, A23G 9/30

(54) **FROZEN DISPENSING MACHINE HEAT TREATMENT SYSTEM AND METHOD**
WÄRMEBEHANDLUNGSSYSTEM UND -VERFAHREN FÜR GEFRORENE AUSGABEMASCHINE
SYSTÈME ET PROCÉDÉ DE TRAITEMENT THERMIQUE DE MACHINE DE DISTRIBUTION CONGELÉE

(30) Priority: 07.04.2016 US 201662319422 P
(43) Date of publication of application: 16.08.2023
(62) Divisional of application: 17716761.6
(73) Proprietor: Taylor Commercial Foodservice, LLC, Rockton, IL 61072 (US)
(72) Inventor: WADLE, Stephen M., Rockton, 61072 (US); MINARD, James J., Rockton, 61072 (US)
(74) Representative: Finch, Steven Caffall

(56) References cited:
- EP-A1- 2 936 992
- WO-A1-2009/027757
- WO-A1-2014/188351
- US-A- 4 522 041
- US-A- 4 680 944

## Description

### BACKGROUND

The present disclosure relates to heat treatment of frozen food product dispensing machines.

In a typical frozen food dispensing machine, such as a frozen dessert dispenser, product or product mix, typically in a liquid state is delivered to the machine. The bag is opened, and the product or mix is emptied from the bag into a storage hopper portion of the machine. The hopper stores the product and refrigerates it, without freezing the product. To dispense, the product is flowed from the hopper into a freezing cylinder where it is frozen, then to a dispensing portion where it is dispensed as frozen food. To ensure clean or sanitary conditions of the dispensing machine and the frozen food itself, the machine is either emptied, cleaned and sanitized or sanitized using a heat-treating cycle at a selected interval, usually once per day. Emptying the machine results in considerable waste of product, which is disposed from the machine. The possibility exists of potential contamination or spillage of product emptied into the hopper once the sanitizing steps are complete.

Two methodologies currently are utilized to ensure that the dispensed product is safe to consume. The first includes a periodic heat treatment of the entire machine, including product storage bins, transport lines, freezing cylinder and dispensing portion, including the product therein. This is a large volume of material and product to bring up to heat treatment temperature, which subsequently takes a considerable amount of time and energy. The other method involves periodically draining the entire machine and manually cleaning it. This is labor and time intensive, and also costly since the drained product is discarded.

WO2014/188351 A1 discloses a frozen food dispensing machine including a bag-in-box product storage container, a cooling and heating cylinder, and a pump that recirculates the product through the cooling and heating cylinder in a pasteurization cycle.

EP 2936992 A1 discloses periodic cleaning and recirculating pasteurization processes in a similar machine.

### SUMMARY

In accordance with the present invention there are provided: a frozen food dispensing machine; and a method of performing a heat treatment cycle on a volume of product in the frozen food dispensing machine; as defined in the independent claims. Optional features are defined in the dependent claims.

The method includes disconnecting a product storage portion of the machine from a freezing portion and a dispensing portion of the machine, defining a heat treatment circuit including the freezing portion and the dispensing portion of the machine, maintaining a first volume of product at the product storage portion at a product storage temperature and performing a heat treatment cycle on a second volume of product disposed in the heat treatment circuit at a heat treatment temperature greater than the product storage temperature.

Optionally, in embodiments, disconnecting the product storage portion of the machine includes disconnecting the probe from a fitment of the product storage portion.

Defining the heat treatment circuit includes connecting the probe to a recirculation line at a recirculation port, the recirculation line extending from the recirculation port to one of the freezing portion or the dispensing portion completing the heat treatment circuit.

Optionally, in this or other embodiments the heat treatment cycle includes raising a temperature of the second volume of product to at least the heat treatment temperature within a first time duration, holding the second volume of product at the heat treatment temperature for at least a second time duration, and cooling the second volume of product to an operational temperature within a third time duration.

Optionally, in this or other embodiments the first time duration is ninety minutes.

Additionally or alternatively, in this or other embodiments the second time duration is 30 minutes.

Additionally or alternatively, in this or other embodiments the heat treatment temperature is 65.6 degrees Celsius (150 degrees Fahrenheit).

Additionally or alternatively, in this or other embodiments the product storage portion of the machine is reconnected to the freezing portion and the dispensing portion of the machine upon completion of the heat treatment cycle.

The frozen food dispensing machine includes a product storage portion including a first volume of product, a freezing portion operably connected to the product storage portion, a dispensing portion operably connected to the freezing portion to dispense a frozen food product, a recirculation line operably connectable to one or more of the freezing portion or the dispensing portion, and a product delivery line operably connected to the freezing portion. The product delivery line is selectably connectable to the product storage portion for dispensing operations of the frozen food dispensing machine or to the recirculation line to define a heat treatment circuit for periodic heat treatment of a second volume of product disposed at the heat treatment circuit. The heat treatment circuit includes the freezing portion and the dispensing portion and omits the product storage portion.

Optionally, in embodiments the product storage portion includes a fitment for connection to the product delivery line.

The product delivery line includes a probe for connecting to the product storage, the probe containing a one-way valve to prevent product flow from the product delivery line into the product storage portion.

Optionally, in this or other embodiments the first volume of product is contained in one or more bins, bottles or bags.

The first volume of product is maintained at an operational temperature of the frozen food dispensing machine.

Optionally, in this or other embodiments the first volume of product is stored in a refrigerated cabinet.

Additionally or alternatively, in this or other embodiments the heat treatment includes raising a temperature of the second volume of product to a heat treatment temperature within a first time duration, holding the second volume of product at the heat treatment temperature for at least a second time duration, and cooling the second volume of product to the operational temperature within a third time duration.

In yet another arrangement, not claimed, a frozen food dispensing machine includes a first zone including a product storage portion, a second zone operably connected to the first zone for flowing product from the first zone, and a third zone configured to receive a flow of product from the second zone, freeze the flow of product, and dispense the flow of product.

The second zone and the third zone are isolatable from the first zone.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is schematic view of an embodiment of a frozen food dispensing machine incorporating elements of the invention, configured for dispensing operation;
FIG. 2 is a schematic view of an embodiment of a frozen food dispensing machine incorporating elements of the invention, configured for heat treatment operation;
FIG. 3 is another schematic view of a frozen food dispensing machine in accordance with an embodiment of the invention;
FIG. 4 is a perspective view of an embodiment of a freezing cylinder of a frozen food dispensing machine;
FIG. 5 is a schematic view of a conductive heater location in an embodiment of a frozen food dispensing machine incorporating elements of the invention;
FIG. 6 is a cross-sectional view of an embodiment of a freezing cylinder of a frozen food dispensing machine.

### DETAILED DESCRIPTION

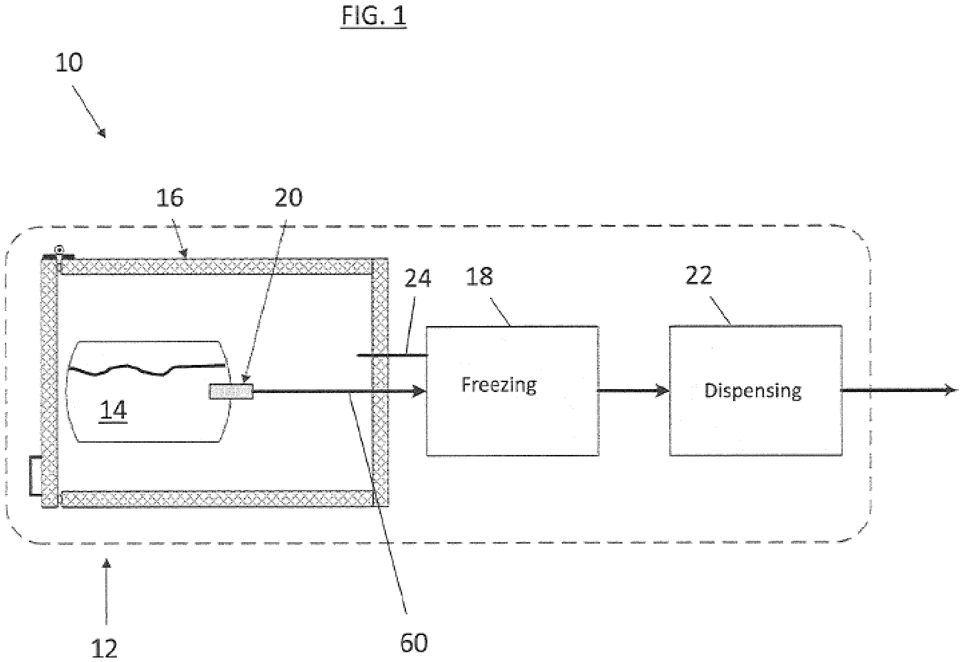

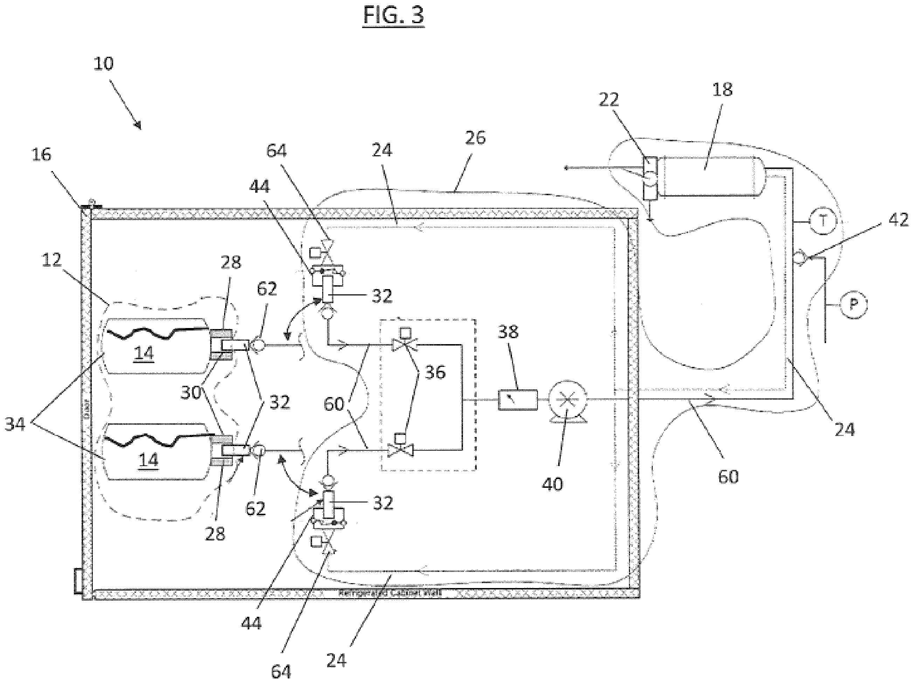

In FIG. 1 is shown a schematic of a frozen food dispensing machine (hereinafter "machine") 10 configured for dispensing operation. The machine 10 includes a product storage section 12, where a volume of liquid product 14 is stored for use by the machine 10. The product storage section 12 includes a storage compartment 16, which in some embodiments is refrigerated to about 5 degrees Celsius (41 degrees Fahrenheit) or other temperature, while in other embodiments the storage compartment 16 is maintained at about ambient temperature. The volume of product 14 is stored in a container, for example, a bag or a bin and is connected to a freezing cylinder 18 via a fitting 20. Shown best in FIG. 3, a product bag 34 is equipped with a fitment 28 that includes a self-closing seal 30 that prevents flow from the bag 34 unless the fitting 20 is connected to the product bag 34. Referring again to FIG. 1, the liquid product 14 is frozen at the freezing cylinder 18 and conveyed to a dispensing portion 22 for dispensing of frozen product into a container, such as a cup or a cone (not shown).

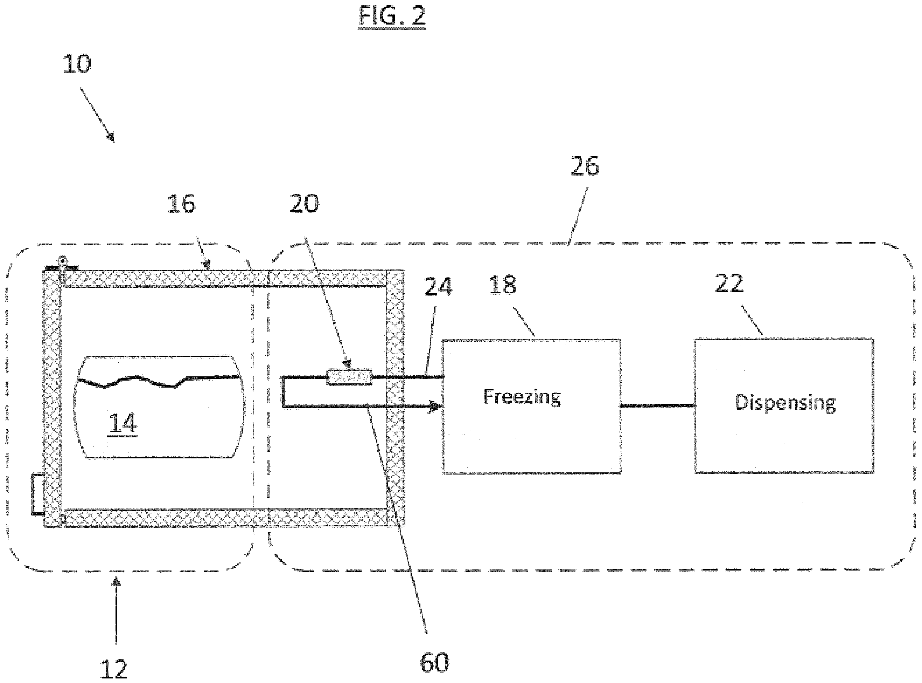

Referring now to FIG. 2, to ensure the product is safe for consumption, the machine 10 is periodically cycled through a heat treatment operation. The machine 10 utilizes a unique method to reduce the heat treated volume and thus reduce the time and energy utilized for a heat treatment cycle. Before initiating heat treatment, the fitting is disconnected from the product 14 and connected to a recirculation line 24. The product 14 is isolated from the remainder of the machine 10, and connecting the fitting 20 to the recirculation line 24 closes a heat treat circuit 26 with the freezing cylinder 18 and the dispensing portion 22. In some embodiments, the recirculation line 24 is connected to the freezing cylinder 18, while in other embodiments the recirculation line is connected to the dispensing portion 22. In addition, the recirculation line 24 may be permanently connected to the machine 10, or it may be a separate part connected to the machine 10, for heat treatment.

The product in the heat treat circuit 26 is then heated up to a heat treat temperature, in some embodiments 65.6 degrees Celsius (150 degrees Fahrenheit), for a selected duration of time to accomplish the heat treatment. In some embodiments, the product is heated to the heat treatment temperature within 90 minutes or less, and will hold at the heat treat temperature for at least 30 minutes. After heat treatment is completed, the product in the heat treat circuit is then cooled to operating temperature and the fitting 20 is disconnected from the recirculation line 24 and reconnected to the product 14 for resumption of normal operation of the machine 10. Embodiments of the invention incorporating this system and method will be described in more detail below. To heat the product in the heat treat circuit 26, a heater disposed at the freezing cylinder 18 (discussed below) is utilized. In alternative arrangements, not claimed, the heater may be located at another portion of the heat treat circuit 26, or the heat treat circuit may be heated by, for example, a heat wrap around lines of the heat treat circuit 26. In still other arrangements, not claimed, the heat treat circuit 26 may direct product through a heater box (not shown) to heat the product.

Referring now to FIG. 3, an exemplary embodiment in accordance with the invention is shown. The machine 10 includes a storage compartment 16 that includes product 14 stored in two product bags 34. As stated above, the product 14 may alternatively be stored in a bin, bottle or other container. Further, while two product bags 34 are illustrated, other quantities may be utilized depending on capacity and use of the storage compartment 16. For example, other embodiments may include 1, 3, 4 or 6 or more product bags 34. In some embodiments, each product bag 34 has a capacity of about 10 liters, but one skilled in the art will readily appreciate that other sizes may be utilized. The probe 32 includes a one-way or check valve 62 that prevents inflow of material or contaminants into the product bag 14. The probe 32 is configured such that product 14 flow is in one direction only, out of product bag 34. The product bag 34 is equipped with fitment 28 that includes self-closing seal 30 that prevents flow from the product bag 34 unless the probe 32 is inserted into the product bag 34.

During normal dispensing operation of the machine 10, a probe 32 is connected to the fitment 28 to allow product 14 to flow from the product bag 34. The probe 32 is connected to, or is an end portion of, a product delivery line 60. The product 14 flows through the probe 32, along the product delivery line 60, and in some embodiments through a changeover valve 36, and then in some embodiments past a switch 38 to detect flow from two or more product bags 34. The product 14 is urged from the product bag 34 by a pump 40 located downstream of the switch 38. Downstream of the pump 40, the product 14 flow exits the storage compartment 16. While in the embodiment shown, the pump 40 is located inside the refrigerated compartment, in other embodiments the pump 40 may be located outside of the storage compartment 16.

From the pump 40, the product 14 flow continues along the product delivery line 60 toward the freezing cylinder 18. Before reaching the freezing cylinder 18, air is injected into the product 14 flow via an air injection valve 42. Once frozen at the freezing cylinder 18, the product 14 is dispensed at the dispenser 22. Air may be injected at any location into the product at any location between the probe 32 and the dispensing portion 22.

Periodically, in some embodiments once per day, the machine 10 undergoes the heat treat cycle. To configure the machine 10 for the heat treat cycle, the probes 32 are disconnected from the fitments 28. Each probe 32 and a corresponding recirculation port 44 of the recirculation line 24 may be sanitized, then each probe 32 is then installed to the corresponding recirculation port 44 of the recirculation line 24. Once the probes 32 are installed to the recirculation ports 44, the valve coupling 64 opens, one or more of the changeover valves 36 open, and the pump 40 is started to circulate product 14 through a heat treat circuit 26, defined from the pump 40 through the product delivery line 60, through the freezing cylinder 18, from the freezing cylinder 18 through the recirculation line 24 and through the recirculation port 44/probe 32 interface and back to the pump 40.

To perform the heat treat, the product 14 flowing through the heat treat circuit 26 is heated from the operational temperature of 5 degrees Celsius (41 degrees Fahrenheit) to the heat treat temperature of 65.6 degrees Celsius (150 degrees Fahrenheit) or higher, within 90 minutes or less, and will hold at the heat treat temperature for at least 30 minutes. Once the heating and hold portions of the heat treat cycle, the product flowing through the heat treat circuit 26 is cooled from the heat treat temperature back to the operational temperature in a time span of 120 minutes or less. In some embodiments, the cooling is aided by activating the freezing cylinder 18.

To return the machine 10 to normal operation once the product 14 is cooled, the pump 40 is stopped. The probes 32 are disconnected from the recirculation ports 44, the valve coupling 64 closes, and both the probes 32 and the fitments 28 are sanitized, and each probe 32 is then connected to a corresponding fitment 28.

Disconnecting the probes 32 from the fitments 28 prior to the heat treat operation isolates the product bags 34 from the heat treat circuit 26 thus greatly reducing a volume of product 14 that is heat treated, and as a consequence reducing the time and energy necessary for the heat and hold portions of the heat treat cycle. Because the product 14 is stored in the product bag 34 with the check valve 62 preventing flow from the probe 32 into the product bag 34, there is no need to heat treat the product 14 inside the product bag 34.

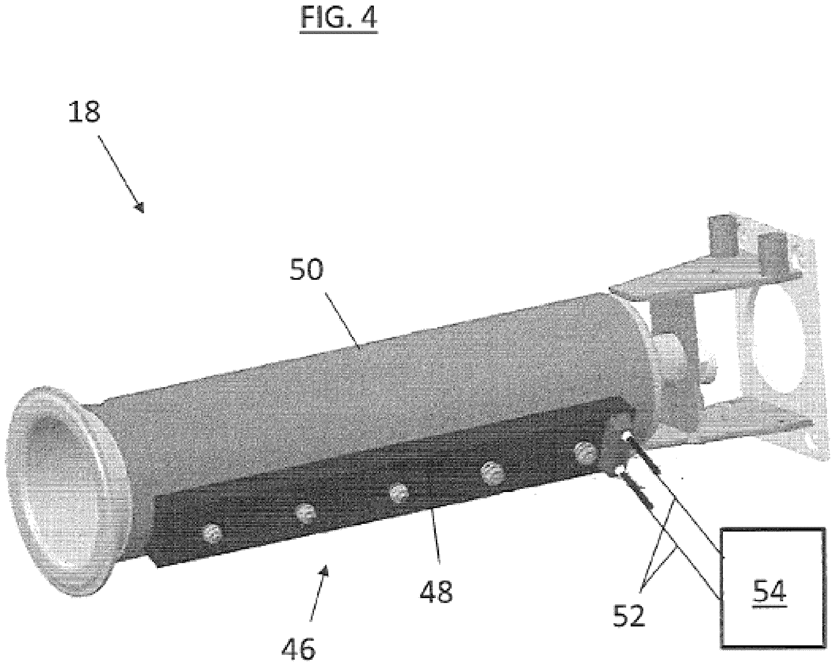

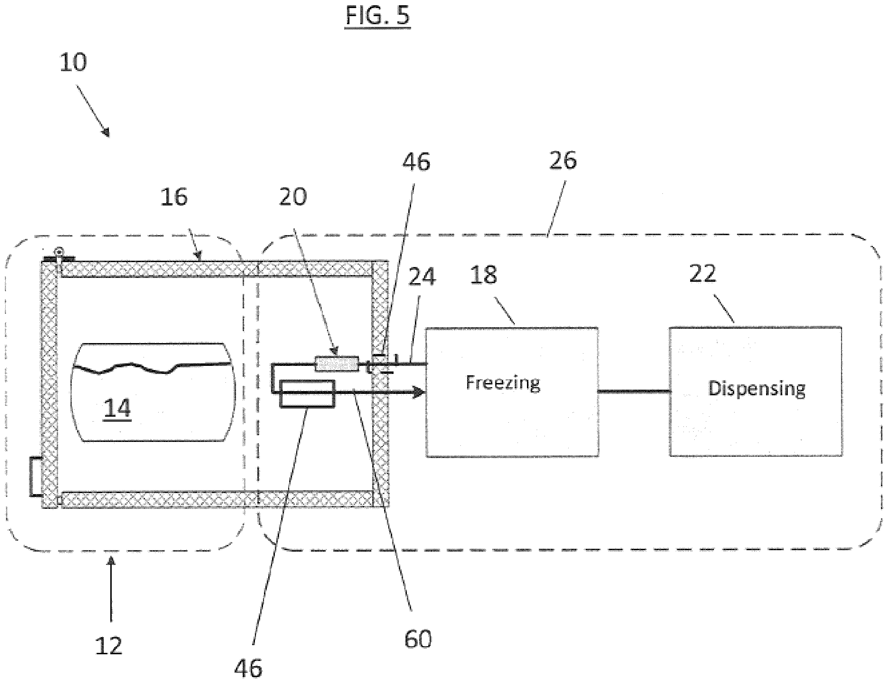

Referring now to FIG. 4, the product 14 flow in the heat treat circuit 26 is heated by a heater located at the freezing cylinder 18. The heater is a conductive heater 46 fixed to an outer wall of the freezing cylinder 18. The conductive heater 46 utilizes a heating element 48 in contact with a freezing cylinder vessel 50, to conductively heat the freezing cylinder vessel 50 and thus heat the product 14 flowing through the freezing cylinder 18. In some embodiment a thermal mastic or graphite gasket (not shown) is located between the heating element 48 and the freezing cylinder vessel 50. The heating element 48 is connected to electrical leads 52, and when a voltage is applied to the electrical leads 52 from a voltage source 54, the heating element 48 heats, thus heating the freezing cylinder vessel 50. In other embodiments, such as shown in FIG. 5, the conductive heater 46 may be disposed at an entrance or exit of the freezing cylinder 18.

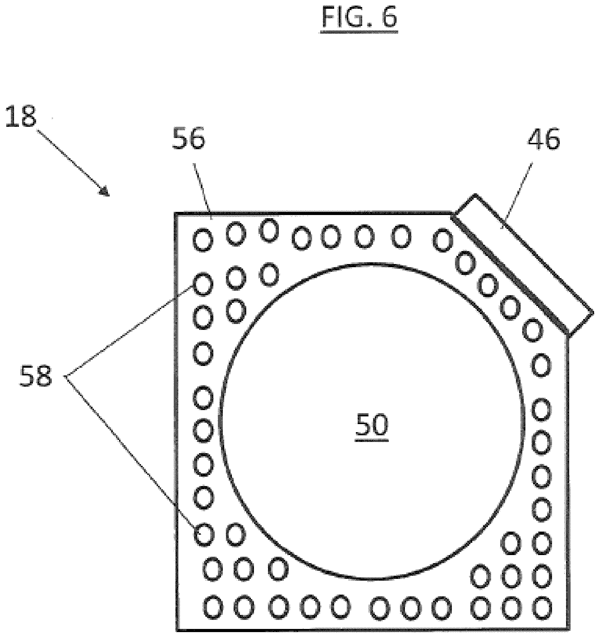

In some embodiments, such as shown in FIG. 6, the conductive heater 46 is used in conjunction with a heat exchanger, for example, a micro-channel heat exchanger (MCHX) 56 wrapped at least partially around the freezing cylinder vessel 50. The MCHX 56 includes a plurality of micro-channels 58 in which a heat transfer medium is located. When energized, the heating element 46 heats the MCHX 56, which in turn heats the freezing cylinder vessel 50. Utilizing the MCHX 56 in conjunction with the conductive heater 46 has the capability of distributing the heating effects of the conductive heater 46 over an increased circumferential area of the freezing cylinder vessel 50 to more quickly and more evenly heat the product 14 flowing through the freezing cylinder vessel 50 during the heat treatment cycle. In some embodiments, the conductive heater 46 heats the freezing cylinder vessel 50 to a freezing cylinder temperature greater than the heat treatment temperature prior to circulating the product through the heat treat circuit 26. In some embodiments, the freezing cylinder temperature is about 79 degrees Celsius (175 degrees Fahrenheit). This allows the product flowing therethrough to be quickly heated to the heat treatment temperature. While in some embodiments, the conductive heater 46 is located at a heat exchanger body of the MCHX 56, in other embodiments, the conductive heater 46 is located at one or more of a MCHX supply line or an MCHX return line.

The invention is not to be seen as limited by the foregoing description, but is only limited by the scope of the appended claims.

## Claims

1. A frozen food dispensing machine (10) comprising:
(i) a product storage portion (12) including a first volume of a product (14);
(ii) a freezing portion (18) operably connected to the product storage portion (12);
(iii) a dispensing portion (22) operably connected to the freezing portion (18), the dispensing portion (22) configured to dispense a frozen food product (14);
(iv) a recirculation line (24) operably connectable to one or more of the freezing portion (18) or the dispensing portion (22);
(v) a product delivery line (60) operably connected to the freezing portion (18), the product delivery line (60) selectably connectable to:
(a) the product storage portion (12) for dispensing operations of the frozen food dispensing machine (10); or
(b) the recirculation line (24) for a periodic heat treatment cycle;
and wherein the product delivery line (60) comprises a probe (32) adapted for connecting and disconnecting to the product storage portion (12), wherein the probe (32) contains a one-way valve (62) adapted to prevent product flow from the product delivery line (60) into the product storage portion (12),
and wherein the recirculation line (24) comprises a recirculation port (44) adapted for connecting and disconnecting to the probe (32) of the product delivery line (60); and
(vi) a heat treatment circuit (26) for the periodic heat treatment cycle of a second volume of the product (14) disposed at the heat treatment circuit (26), the heat treatment circuit (26) including the freezing portion (18) and the dispensing portion (22) and omitting the product storage portion (12), the heat treatment circuit (26) configured to circulate the second volume of the product (14) via a pump (40) through the product delivery line (60), the freezing portion (18), and the recirculation line (24); and
further comprising a conductive heater (46) located at the freezing portion (18) to heat the product that is disposed within the freezing portion (18).

2. The frozen food dispensing machine (10) of claim 1, wherein the product storage portion (12) includes a fitment (28) adapted for connection to the product delivery line (60).

3. The frozen food dispensing machine (10) of any of claims 1 and 2 further comprising one or more bins, bottles or bags (34) adapted to contain the first volume of the product (14), the one or more bins, bottles or bags (34) located within the product storage portion (12).

4. The frozen food dispensing machine (10) of any of claims 1-3, wherein the first volume of the product (14) is maintained at an operational temperature of the product storage portion (12) of the frozen food dispensing machine (10).

5. A method of performing a heat treatment cycle on a volume of product (14) in the frozen food dispensing machine (10) of claim 1, comprising:
(i) disconnecting the product storage portion (12) of the machine (10) from the freezing portion (18) and the dispensing portion (22) of the machine (10);
(ii) connecting the probe (32) of the product delivery line (60) to the recirculation port (44) of the recirculation line (24);
(iii) maintaining the first volume of the product (14) at the product storage portion (12) at a product storage temperature based on an operational temperature of the product storage portion (12); and
(iv) performing the heat treatment cycle on the second volume of the product (14) disposed in the heat treatment circuit at a heat treatment temperature greater than the product storage temperature.

6. The method of Claim 5, wherein the product storage portion (12) includes a fitment (28) adapted for connecting and disconnecting to the product delivery line (60), wherein disconnecting the product storage portion (12) of the machine (10) comprises disconnecting the probe (32) from the fitment (28) of the product storage portion (12).

7. The method of Claim 5, wherein the recirculation line (24) extends from the recirculation port (44) to one of the freezing portion (18) or the dispensing portion (22), completing the heat treatment circuit (26).

8. The method of any of Claims 5-7, wherein the heat treatment cycle includes:
(i) raising a temperature of the second volume of the product (14) to at least the heat treatment temperature within a first time duration;
(ii) holding the second volume of the product (14) at the heat treatment temperature for at least a second time duration; and
(iii) cooling the second volume of the product (14) to an operational temperature within a third time duration.

9. The method of Claim 8, wherein the first time duration is ninety minutes.

10. The method of Claim 8 or 9, wherein the second time duration is 30 minutes.

11. The method of any of Claims 8-10, wherein the heat treatment temperature is 65.6 degrees Celsius (150 degrees Fahrenheit).

12. The method of any of Claims 5-11, further comprising reconnecting the product storage portion (12) of the machine (10) to the freezing portion (18) and the dispensing portion (22) of the machine (10) upon completion of the heat treatment cycle.

13. The frozen food dispensing machine of any of claims 1-4, wherein the freezing portion is a freezing cylinder (18), and wherein the conductive heater is fixed to an outer wall of the freezing cylinder.

14. The frozen food dispensing machine of any of claims 1-4, wherein the conductive heater is in conjunction with a micro-channel heat exchanger (56) that is wrapped at least partially around a freezing cylinder vessel (50) of the freezing portion.

## Patentansprüche

1. Ausgabemaschine (10) für gefrorene Lebensmittel, die Folgendes umfasst:
(i) einen Produktlagerabschnitt (12), der ein erstes Volumen eines Produkts (14) beinhaltet;
(ii) einen Gefrierabschnitt (18), der mit dem Produktlagerabschnitt (12) wirkverbunden ist;
(iii) einen Ausgabeabschnitt (22), der mit dem Gefrierabschnitt (18) wirkverbunden ist, wobei der Ausgabeabschnitt (22) dazu ausgelegt ist, ein gefrorenes Lebensmittelprodukt (14) auszugeben;
(iv) eine Rezirkulationsleitung (24), die mit einem oder mehreren des Gefrierabschnitts (18) oder des Ausgabeabschnitts (22) wirkmäßig verbindbar ist;
(v) eine Produktförderleitung (60), die mit dem Gefrierabschnitt (18) wirkverbunden ist, wobei die Produktförderleitung (60) selektiv mit Folgendem verbindbar ist:
(a) dem Produktlagerabschnitt (12) für Ausgabeoperationen der Ausgabemaschine (10) für gefrorene Lebensmittel; oder
(b) der Rezirkulationsleitung (24) für einen periodischen Wärmebehandlungszyklus;
und wobei die Produktförderleitung (60) eine Sonde (32) umfasst, die zum Verbinden mit dem Produktlagerabschnitt (12) und Trennen von demselben angepasst ist, wobei die Sonde (32) ein Einwegeventil (62) enthält, das angepasst ist, einen Produktfluss von der Produktförderleitung (60) in den Produktlagerabschnitt (12) zu verhindern,
und wobei die Rezirkulationsleitung (24) einen Rezirkulationsanschluss (44) umfasst, der zum Verbinden mit der Sonde (32) der Produktförderleitung (60) und Trennen von derselben angepasst ist; und
(vi) einen Wärmebehandlungskreis (26) für den periodischen Wärmebehandlungszyklus eines zweiten Volumens des Produkts (14), das am Wärmebehandlungskreis (26) angeordnet ist, wobei der Wärmebehandlungskreis (26) den Gefrierabschnitt (18) und den Ausgabeabschnitt (22), nicht aber den Produktlagerabschnitt (12) beinhaltet, wobei der Wärmebehandlungskreis (26) dazu ausgelegt ist, das zweite Volumen des Produkts (14) via eine Pumpe (40) durch die Produktförderleitung (60), den Gefrierabschnitt (18) und die Rezirkulationsleitung (24) zu zirkulieren; und
die ferner eine leitende Heizung (46) umfasst, die sich am Gefrierabschnitt (18) befindet, um das Produkt zu erwärmen, das im Gefrierabschnitt (18) angeordnet ist.

2. Ausgabemaschine (10) für gefrorene Lebensmittel nach Anspruch 1, wobei der Produktlagerabschnitt (12) ein Fitting (28) beinhaltet, das zur Verbindung mit der Produktförderleitung (60) angepasst ist.

3. Ausgabemaschine (10) für gefrorene Lebensmittel nach einem der Ansprüche 1 und 2, die ferner eine (n) oder mehrere Behälter, Flaschen oder Beutel (34) umfasst, die angepasst sind, das erste Volumen des Produkts (14) zu enthalten, wobei sich der (die) eine oder mehreren Behälter, Flaschen oder Beutel (34) im Produktlagerabschnitt (12) befinden.

4. Ausgabemaschine (10) für gefrorene Lebensmittel nach einem der Ansprüche 1 bis 3, wobei das erste Volumen des Produkts (14) auf einer Betriebstemperatur des Produktlagerabschnitts (12) der Ausgabemaschine (10) für gefrorene Lebensmittel gehalten wird.

5. Verfahren zum Durchführen eines Wärmebehandlungszyklus an einem Volumen eines Produkts (14) in der Ausgabemaschine (10) für gefrorene Lebensmittel nach Anspruch 1, das Folgendes umfasst:
(i) Trennen des Produktlagerabschnitts (12) der Maschine (10) vom Gefrierabschnitt (18) und vom Ausgabeabschnitt (22) der Maschine (10);
(ii) Verbinden der Sonde (32) der Produktförderleitung (60) mit dem Rezirkulationsanschluss (44) der Rezirkulationsleitung (24) ;
(iii) Halten des ersten Volumens des Produkts (14) am Produktlagerabschnitt (12) auf einer Produktlagertemperatur auf Basis einer Betriebstemperatur des Produktlagerabschnitts (12); und
(iv) Durchführen des Wärmebehandlungszyklus am zweiten Volumen des Produkts (14), das im Wärmebehandlungskreis angeordnet ist, bei einer Wärmebehandlungstemperatur, die größer ist als die Produktlagertemperatur.

6. Verfahren nach Anspruch 5, wobei der Produktlagerabschnitt (12) ein Fitting (28) beinhaltet, das zum Verbinden mit der Produktförderleitung (60) und zum Trennen von derselben angepasst ist, wobei das Trennen des Produktlagerabschnitts (12) der Maschine (10) das Trennen der Sonde (32) vom Fitting (28) des Produktlagerabschnitts (12) umfasst.

7. Verfahren nach Anspruch 5, wobei sich die Rezirkulationsleitung (24) vom Rezirkulationsanschluss (44) zu einem des Gefrierabschnitts (18) oder des Ausgabeabschnitts (22) erstreckt, wodurch der Wärmebehandlungskreis (26) abgeschlossen wird.

8. Verfahren nach einem der Ansprüche 5 bis 7, wobei der Wärmebehandlungszyklus Folgendes umfasst:
(i) Erhöhen einer Temperatur des zweiten Volumens des Produkts (14) innerhalb einer ersten Zeitdauer mindestens auf die Wärmebehandlungstemperatur;
(ii) Halten des zweiten Volumens des Produkts (14) für mindestens eine zweite Zeitdauer auf der Wärmebehandlungstemperatur; und
(iii) Abkühlen des zweiten Volumens des Produkts (14) innerhalb einer dritten Zeitdauer auf eine Betriebstemperatur.

9. Verfahren nach Anspruch 8, wobei die erste Zeitdauer neunzig Minuten beträgt.

10. Verfahren nach Anspruch 8 oder 9, wobei die zweite Zeitdauer 30 Minuten beträgt.

11. Verfahren nach einem der Ansprüche 8 bis 10, wobei die Wärmebehandlungstemperatur 65,6 Grad Celsius (150 Grad Fahrenheit) beträgt.

12. Verfahren nach einem der Ansprüche 5 bis 11, das nach dem Abschluss des Wärmebehandlungszyklus ferner das Neuverbinden des Produktlagerabschnitts (12) der Maschine (10) mit dem Gefrierabschnitt (18) und dem Ausgabeabschnitt (22) der Maschine (10) umfasst.

13. Ausgabemaschine für gefrorene Lebensmittel nach einem der Ansprüche 1 bis 4, wobei der Gefrierabschnitt ein Gefrierzylinder (18) ist, und wobei die leitende Heizung an einer Außenwand des Gefrierzylinders befestigt ist.

14. Ausgabemaschine für gefrorene Lebensmittel nach einem der Ansprüche 1 bis 4, wobei die leitende Heizung zusammen mit einem Mikrokanalwärmetauscher (56) wirkt, der mindestens teilweise um ein Gefrierzylinderbehältnis (50) des Gefrierabschnitts gewunden ist.

## Revendications

1. Machine (10) de distribution d'aliments congelés comprenant :
(i) une partie de stockage de produit (12) comportant un premier volume d'un produit (14) ;
(ii) une partie de congélation (18) connectée de manière opérationnelle à la partie de stockage de produit (12) ;
(iii) une partie de distribution (22) connectée de manière opérationnelle à la partie de congélation (18), la partie de distribution (22) étant configurée pour distribuer un produit (14) alimentaire congelé ;
(iv) une ligne de recirculation (24) pouvant être connectée de manière opérationnelle à une ou plusieurs parmi la partie de congélation (18) ou la partie de distribution (22) ;
(v) une ligne d'amenée de produit (60) connectée de manière opérationnelle à la partie de congélation (18), la ligne d'amenée de produit (60) étant connectée de manière sélective :
(a) à la partie de stockage de produit (12) pour des opérations de distribution de la machine (10) de distribution d'aliments congelés ; ou
(b) à la ligne de recirculation (24) pour un cycle de traitement thermique périodique ;
et dans laquelle la ligne d'amenée de produit (60) comprend une sonde (32) adaptée pour être connectée et déconnectée de la partie de stockage de produit (12), dans laquelle la sonde (32) contient une soupape unidirectionnelle (62) adaptée pour empêcher un écoulement de produit depuis la ligne d'amenée de produit (60) dans la partie de stockage de produit (12),
et dans laquelle la ligne de recirculation (24) comprend un orifice de recirculation (44) adapté pour se connecter et se déconnecter de la sonde (32) de la ligne d'amenée de produit (60) ; et
(vi) un circuit de traitement thermique (26) pour le cycle de traitement thermique périodique d'un deuxième volume du produit (14) disposé au niveau du circuit de traitement thermique (26), le circuit de traitement thermique (26) comportant la partie de congélation (18) et la partie de distribution (22) et omettant la partie de stockage de produit (12), le circuit de traitement thermique (26) étant configuré pour faire circuler le deuxième volume du produit (14) via une pompe (40) à travers la ligne d'amenée de produit (60), la partie de congélation (18), et la ligne de recirculation (24) ; et
comprenant en outre un élément chauffant conducteur (46) situé au niveau de la partie de congélation (18) pour chauffer le produit qui est disposé dans la partie de congélation (18).

2. Machine (10) de distribution d'aliments congelés selon la revendication 1, dans laquelle la partie de stockage de produit (12) comporte un raccord (28) adapté pour être connecté à la ligne d'amenée de produit (60).

3. Machine (10) de distribution d'aliments congelés selon l'une quelconque des revendications 1 et 2 comprenant en outre un ou plusieurs bacs, bouteilles ou sacs (34) adaptés pour contenir le premier volume du produit (14), les un ou plusieurs bacs, bouteilles ou sacs (34) étant situés dans la partie de stockage de produit (12).

4. Machine (10) de distribution d'aliments congelés selon l'une quelconque des revendications 1 à 3, dans laquelle le premier volume du produit (14) est maintenu à une température opérationnelle de la partie de stockage de produit (12) de la machine (10) de distribution d'aliments congelés.

5. Procédé de réalisation d'un cycle de traitement thermique sur un volume de produit (14) dans la machine (10) de distribution d'aliments congelés selon la revendication 1, comprenant :
(i) la déconnexion de la partie de stockage de produit (12) de la machine (10) de la partie de congélation (18) et la partie de distribution (22) de la machine (10) ;
(ii) la connexion de la sonde (32) de la ligne d'amenée de produit (60) à l'orifice de recirculation (44) de la ligne de recirculation (24) ;
(iii) le maintien du premier volume du produit (14) au niveau de la partie de stockage de produit (12) à une température de stockage de produit sur la base d'une température opérationnelle de la partie de stockage de produit (12) ; et
(iv) la réalisation du cycle de traitement thermique sur le deuxième volume du produit (14) disposé dans le circuit de traitement thermique à une température de traitement thermique supérieure à la température de stockage de produit.

6. Procédé selon la revendication 5, dans lequel la partie de stockage de produit (12) comporte un raccord (28) adapté pour se connecter et se déconnecter de la ligne d'amenée de produit (60), dans lequel la déconnexion de la partie de stockage de produit (12) de la machine (10) comprend la déconnexion de la sonde (32) du raccord (28) de la partie de stockage de produit (12).

7. Procédé selon la revendication 5, dans lequel la ligne de recirculation (24) s'étend de l'orifice de recirculation (44) à une parmi la partie de congélation (18) ou la partie de distribution (22), complétant le circuit de traitement thermique (26).

8. Procédé selon l'une quelconque des revendications 5 à 7, dans lequel le cycle de traitement thermique comporte :
(i) l'augmentation de la température du deuxième volume du produit (14) jusqu'à au moins la température de traitement thermique pendant une première durée ;
(ii) le maintien du deuxième volume du produit (14) à la température de traitement thermique pendant au moins une deuxième durée ; et
(iii) le refroidissement du deuxième volume du produit (14) jusqu'à une température opérationnelle pendant une troisième durée.

9. Procédé selon la revendication 8, dans lequel la première durée est de quatre-vingt-dix minutes.

10. Procédé selon la revendication 8 ou 9, dans lequel la deuxième durée est de 30 minutes.

11. Procédé selon l'une quelconque des revendications 8 à 10, dans lequel la température de traitement thermique est de 65,6 degrés (150 degrés Fahrenheit).

12. Procédé selon l'une quelconque des revendications 5 à 11, comprenant en outre la reconnexion de de la partie de stockage de produit (12) de la machine (10) à la partie de congélation (18) et à la partie de distribution (22) de la machine (10) à la fin du cycle de traitement thermique

13. Machine de distribution d'aliments congelés selon l'une quelconque des revendications 1 à 4, dans laquelle la partie de congélation est un cylindre de congélation (18), et dans laquelle l'élément chauffant conducteur est fixé sur une paroi extérieure du cylindre de congélation.

14. Machine de distribution d'aliments congelés selon l'une quelconque des revendications 1 à 4, dans laquelle l'élément chauffant conducteur est associé à un échangeur de chaleur à micro-canaux (56) qui est enveloppé au moins partiellement autour d'un récipient de cylindre de congélation (50) de la partie de congélation.
